# DEMANDE DE BREVET EUROPEEN

(11) **EP 1 244 329 A1**
(43) Date de publication de la demande: **25.09.2002**
(21) Numéro de dépôt: 02290469.2
(22) Date de dépôt: 26.02.2002
(51) Int. Cl.: H04Q 11/04

(54) **Procédé et dispositif pour transferer des données dans un réseau de communication comportant une artère à faible débit**

(30) Priorité: 27.02.2001 FR 0102654
(71) Demandeur: Thales, 75008 Paris (FR)
(72) Inventeur: Bavant, Marc, c/o Thales Intellectual Property, 94117 Arcueil Cédex (FR); Calvet, Bruno, c/o Thales Intellectual Property, 94117 Arcueil Cédex (FR); Combe, Barbara, c/o Thales Intellectual Property, 94117 Arcueil Cédex (FR); Loiseau, Luc, c/o Thales Intellectual Property, 94117 Arcueil Cédex (FR)
(74) Mandataire: Dudouit, Isabelle

(57) **Abrégé**

Procédé pour acheminer des données entre plusieurs usagers A, B, dans un réseau de communication comportant au moins une artère à bas débit et une ou plusieurs artères à débit normal, le réseau comportant une unité de base de transmission et au moins un protocole de couche d'adaptation, les données à transmettre se présentant sous la forme de paquets Pi ayant une taille inférieure à la taille de l'unité de base de transmission, comportant au moins les étapes suivantes :
- extraire les paquets Pi des cellules en amont et/ou en aval d'une artère à bas débit, (étape (4a) ou étape (5a)),
- insérer lesdits paquets selon un protocole donné, dans les cellules d'un circuit virtuel établi entre les extrémités de l'artère à bas débit, (étape (4b)), ou entre les usagers, (étapes (5b) et (5c)).

Application dans un réseau supportant le protocole AAL2.

## Description

La présente invention concerne le domaine des transmissions de données dans un réseau de communication comportant une ou plusieurs artères à faible débit ou des artères comportant des canaux à faible débit.

Elle s'applique notamment dans le domaine des télécommunications et concerne plus particulièrement une méthode permettant de mettre en oeuvre le protocole AAL2 (ATM Adaptation Layer 2) pour l'acheminement de données au sein d'un réseau de commutation ATM (Asynchronous Transfer Mode) comportant une ou plusieurs artères à bas débit.

Elle est utilisée par exemple dans des réseaux comportant des artères par liaison satellite, radio ou tout autre type, où les ressources en bande passante peuvent être très limitées.

Elle s'applique par exemple dans tous réseaux offrant différents services tels que la téléphonie, les services vocaux, la télécopie, la transmission de données par Modem.

Les réseaux ATM ont été conçus pour permettre l'acheminement à haut débit de données multiservices (voix, vidéo, données,...). Ils commutent des cellules de longueur fixe comprenant une charge utile de 48 octets.

Dans cette optique, les premières mises en oeuvre de services téléphoniques sur ATM se sont attachées à recréer un service comparable à celui que rendent les réseaux synchrones de commutation publique. La voix est numérisée à 64 kbits/s, les cellules ATM sont remplies séquentiellement avec 47 échantillons de parole et avec un octet supplémentaire fournissant un numéro de séquence qui autorise la détection des pertes de cellule, ce qui permet de générer un bruit de remplacement pour les informations perdues. Cette mise en oeuvre est connue sous le nom de protocole de la couche d'adaptation AAL1 (ATM Adaptation Layer 1) normalisé par l'UIT dans la recommandation [I.363.1] en 1996 (spécification de la couche d'adaptation ATM du RNIS-LB : AAL de type 1 (UIT)).

L'UIT a ensuite, en 1997, normalisé une nouvelle couche d'adaptation (AAL2) dédiée à la transmission sur un réseau ATM de paquets applicatifs à faible débit et de taille variable, selon la recommandation [1.363.2] (spécification de la couche d'adaptation ATM du RNIS-LB : AAL de type 2 (UIT)). Ce nouveau protocole est plus spécifiquement destiné aux services temps réel qui exploitent des techniques de compression efficaces. La vidéo compressée était une application couramment envisagée pour cette couche d'adaptation dans la mesure où les débits nécessaires pour la vidéo pleine bande ne permettait pas d'envisager une exploitation commercialement viable. Une autre application utile de la couche d'adaptation concerne la création d'un réseau de tunnels (connu sous le terme anglo-saxon de trunking) entre un petit nombre de réseaux téléphoniques locaux (PABX).

Les techniques de compression produisent des paquets de longueur variable avec un débit relativement « faible ». La couche d'adaptation AAL2 permet de transporter ces paquets dans des cellules ATM en offrant la possibilité que plusieurs paquets soient dans la même cellule ou qu'un paquet se trouve scindé en deux parties transportées dans des cellules consécutives au moment de l'émission.

Dans certains domaines d'application présentant des contraintes de fonctionnement, la bande passante utilisée peut se trouver réduite et les artères des réseaux ATM ont un débit peu élevé, par exemple 2Mbit/s, par rapport à des débits habituels de l'ordre de 50, 155 ou 622 Mbit/s. De plus, les besoins de connectivité entre des zones éloignées et une métropole imposent des liaisons à bas débit, par exemple 64 kbit/s, notamment via des satellites. La part des services de phonie reste importante dans ces réseaux et il a fallu utiliser des techniques de vocodage plus économes en bande passante que la technique civile MIC (abrégé de modulation par impulsions et codage) selon la recommandation [G.711] à 64 kbit/s comme, par exemple, le codage Delta à 16 kbit/s.

Parallèlement, l'évolution des besoins de communications civiles a permis l'émergence de techniques de codage et de compression de la phonie encore plus performantes : c'est notamment le cas de la compression mise en oeuvre dans les réseaux GSM de téléphonie mobile, ou encore le codage à 5,3 kbit/s spécifié dans la recommandation [G.723.1] de l'UIT (codeur de signaux vocaux à double débit pour communications multimédias acheminées à 5,3 kbit/s et à 6,3 kbit/s) et utilisé dans les communications vocales sur IP (abrégé anglo-saxon de Internet Protocol).

Dans le domaine des communications téléphoniques compressées par un algorithme du type de [G.723.1] dans un réseau où certaines artères sont à bas débit, les données initiales d'une certaine longueur se présentent, après compression, sous la forme de trames de petite taille. Par exemple, les trames qui sortent d'un vocodeur sont de petite taille (typiquement : 1, 4 ou 20 octets) mais correspondent à une durée de parole qui est longue (typiquement : 30 ms). Pour utiliser au mieux la bande passante, il est possible d'envisager de placer plusieurs de ces trames dans une cellule ATM, mais le temps nécessaire pour remplir la cellule avant qu'on ne puisse l'émettre est important et va créer un délai de latence élevé qui peut se traduire par une mauvaise qualité subjective de la communication ou par des phénomènes d'écho gênants.

Un moyen de contourner cet obstacle consisterait à multiplexer plusieurs communications distinctes dans le même circuit virtuel ATM. Par exemple, si deux communications sont actives simultanément, il est possible de mettre dans chaque cellule ATM une trame de l'une et une trame de l'autre, ce qui autorise la cellule à être émise après un délai deux fois plus court que celui qui est nécessaire quand une seule communication est active. Toutefois, cette possibilité de multiplexage nécessite que les deux communications soient établies entre le même couple de points d'accès du réseau ATM, ce qui n'est pas le cas le plus général.

De manière générale, l'idée de l'invention consiste à optimiser le transfert des données dans un réseau de communication comportant une ou plusieurs artères à faible débit, les données lorsqu'elles sont compressées se présentant sous la forme de trames dont la taille est inférieure à la taille de l'unité de base de transmission, par exemple une cellule, et le réseau mettant en oeuvre un protocole de couche d'adaptation pour distribuer et multiplexer les trames de petite taille dans un paquet de taille fixe afin de les acheminer dans le réseau.

L'idée de l'invention consiste, par exemple, à mettre en forme certaines données, notamment en amont des artères à bas débit ou à l'entrée d'artères comportant un ou plusieurs canaux à bas débit et acheminer les données dans un tel réseau.

L'expression « artère à bas débit » désigne dans la description soit une artère à bas débit, soit une artère comportant un ou plusieurs canaux à bas débit.

Le réseau de communication est caractérisé notamment au moyen d'une unité de base de transmission, par exemple une cellule ou un conteneur de taille fixe, tel qu'une cellule ATM et d'un protocole d'adaptation ou protocole de couche d'adaptation.

Appliquée au protocole AAL2, l'invention concerne une mise en oeuvre spécifique de ce protocole AAL2 qui permet d'optimiser le remplissage des cellules sur les canaux à faible débit sans pour autant introduire de délai trop important dans les communications téléphoniques.

L'invention comporte également une composante liée à la recherche d'une route passant par les organes capables d'effectuer cette mise en oeuvre du protocole AAL2 et une composante liée à la détection des pertes d'information afin de gérer une information conventionnelle de substitution pour maintenir le synchronisme ou l'intégrité binaire.

Les termes 'amont' et 'aval' sont considérés par rapport à un sens de circulation des données dans le réseau.

L'invention concerne un procédé pour acheminer des données entre plusieurs usagers A, B, dans un réseau de communication comportant au moins une artère à bas débit et une ou plusieurs artères à débit normal, le réseau comportant une unité de base de transmission, telle qu'une cellule, et au moins un protocole de couche d'adaptation, les données à transmettre se présentant sous la forme de paquets Pi ayant une taille inférieure à la taille de l'unité de base de transmission. Il est caractérisé en ce qu'il comporte au moins les étapes suivantes :
- extraire les paquets Pi des cellules en amont et/ou en aval d'une artère à bas débit, (étapes (4a) ou (5a)),
- insérer lesdits paquets selon un protocole de couche d'adaptation donné, dans les cellules d'un circuit virtuel établi entre les extrémités de l'artère à bas débit, (étape (4b)), ou entre les usagers, (étapes (5b) et (5c)).

Il peut comporter un multiplexage de données d'un même usager ou d'usagers différents, en amont de l'artère à bas débit et/ou un démultiplexage en aval de l'artère à bas débit.

Selon un mode de mise en oeuvre, les cellules sont déroutées avant les étapes d'extraction (étape (4a)) et d'insertion (étape (4b)) et les cellules issues de l'étape (5c) sont injectées dans un circuit virtuel établi entre usagers.

Le protocole de couche d'adaptation utilisé notamment pour insérer des paquets est par exemple le protocole AAL2.

L'invention concerne aussi un dispositif de communication de données entre plusieurs usagers A, B pour un réseau de communication comportant au moins une artère à bas débit, le réseau comportant une unité de base de transmission, telle qu'une cellule, et supportant au moins un protocole de couche d'adaptation. Il est caractérisé en ce qu'il comporte au moins un organe multiplexeur adapté à commuter des paquets Pi transportés dans les cellules selon le protocole d'adaptation, entre plusieurs artères virtuelles constituées par des connexions en mode multiplexé ou non multiplexé.

Le dispositif peut comporter les éléments suivants :
- un brasseur pour transmettre une cellule vers l'organe multiplexeur et pour commuter de manière transparente les cellules ne devant pas emprunter une artère à bas débit,
- un moyen pour extraire les paquets Pi des cellules empruntant une artère à bas débit et la mise en cellules des paquets, pour chaque artère virtuelle,
- un moyen d'aiguillage des paquets reçus du moyen et une table adaptée à déterminer l'artère virtuelle de sortie de la cellule.

L'invention concerne par ailleurs un réseau pour transporter des données entre plusieurs usagers A, B, le réseau comportant une ou plusieurs artères à bas débit et une ou plusieurs artères à débit normal, au moins un protocole de couche d'adaptation et une unité de base de transmission telle qu'une cellule, caractérisé en ce qu'il comporte au moins un dispositif de commutation comportant au moins une des caractéristiques précédentes disposé en amont et /ou en aval d'une artère à bas débit.

Le réseau peut aussi comporter plusieurs commutateurs ATM.

Le procédé et le dispositif selon l'invention offrent notamment comme avantage d'optimiser l'acheminement des données téléphoniques vocodées au sein d'un réseau de commutation ATM comportant une ou plusieurs artères à bas débit.

Le multiplexage de trames vocodées dans une même cellule, l'on est appliqué uniquement là où cela ne risque pas d'augmenter le temps de latence.

D'autres avantages et caractéristiques de l'invention apparaîtront mieux à la lecture de la description qui suit où sont proposés des exemples de mise en oeuvre à titre illustratif, ceci en référence aux figures annexées qui représentent :
- La figure 1 une architecture générale d'un réseau selon l'invention,
- La figure 2 un schéma du transfert de l'information entre un usager A et un usager B,
- Les figures 3 et 4 l'encapsulation des différents niveaux dans les cellules à deux étapes différentes du procédé selon l'invention,
- La figure 5 un exemple de commutateur muni d'un organe multiplexeur selon l'invention.

Afin de mieux faire comprendre l'objet de la présente invention, la description qui suit concerne une mise en oeuvre spécifique du protocole AAL2 pour optimiser le remplissage de l'unité de base de transmission, telle qu'une cellule de type ATM de taille fixe sur des artères où les ressources en bande passante sont très rares (artères à bas débit) sans pour autant introduire de délai trop important dans les communications téléphoniques.

Cet exemple de mise en oeuvre de l'invention est donné à titre explicatif et nullement limitatif. Le procédé peut être utilisé dans tous réseaux de communication comportant une ou plusieurs artères à bas débit où les données à acheminer sont transformées par exemple à l'aide d'un algorithme de compression, les trames résultantes ayant des tailles inférieures à la taille de la cellule, éventuellement variable, l'acheminement des données dans le réseau étant effectué au moyen de paquets de taille fixe, les trames étant distribuées et multiplexées dans ces paquets au moyen d'un protocole adapté.

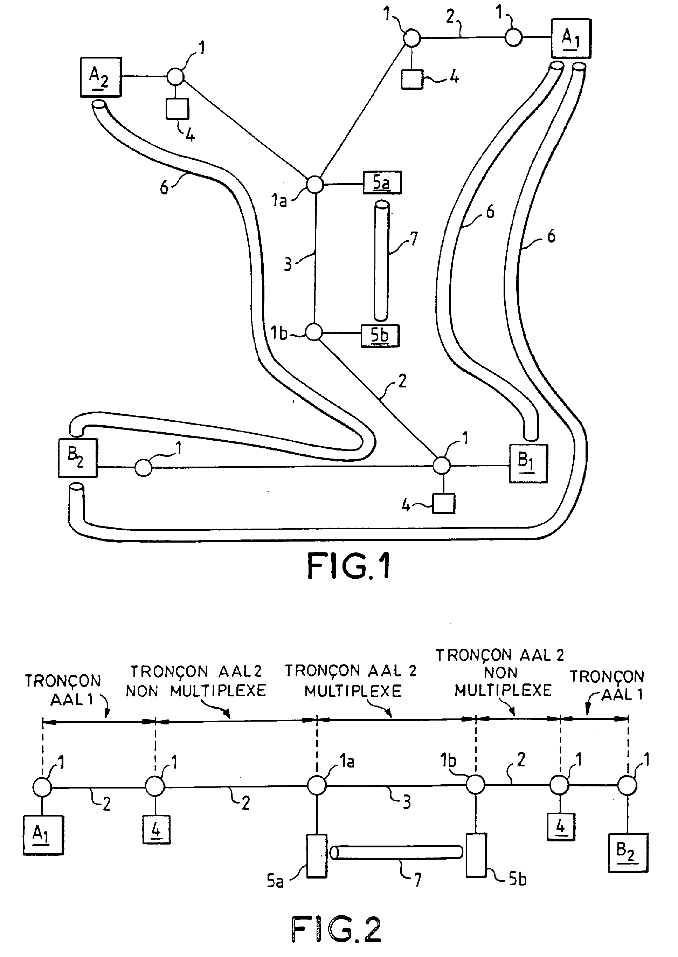

La figure 1 décrit un exemple d'architecture générale d'un réseau selon l'invention. Ce réseau comporte plusieurs commutateurs 1 reliés par des artères 2 à « débit normal » ou des artères 3 à « bas débit ». Certains commutateurs comportent un organe d'adaptation 4 qui effectue les étapes (2) et (7) du procédé décrit ci-après. Le couple d'organes d'adaptation utilisé par une communication donnée est déterminé par l'algorithme de routage mis en oeuvre au sein du réseau.

Les commutateurs 1a, 1b situés aux deux extrémités d'une artère de communication 3 à « bas débit », sont par exemple aussi associés à un organe multiplexeur 5 notés respectivement 5a, 5b, adapté à réaliser les étapes (4) et (5) du procédé.

Dans certains cas d'application, des circuits virtuels de type différents peuvent être utilisés. Par exemple, la figure 1 représente trois circuits virtuels de bout en bout 6, entre usagers A2-B2, A1-B1, A1-B2 et un circuit virtuel 7 entre deux organes multiplexeurs adjacents 5a, 5b.

Un exemple de mise en oeuvre du procédé selon l'invention comporte par exemple au moins les étapes suivantes :

### Cheminement des informations

Une communication étant établie entre deux terminaux Ai et Bj d'usagers du réseau représenté à la figure 1 et désignés ci-après pour des raisons de simplification « usager Ai ou usager Bj » au lieu de terminal de l'usager Ai ou de l'usager Bj, un organe d'adaptation 4 situé sur le trajet de la communication a été affecté à chacun des usagers Ai et Bj en communication. On suppose également que la communication emprunte une artère 3 à bas débit dont les commutateurs 1a, 1b disposés à chacune de ses extrémités sont pourvus d'un organe multiplexeur 5a, 5b.

### Première étape

Le procédé comporte par exemple une première étape (1), qui peut être facultative, consistant à transporter les échantillons de parole produits par l'usager A jusqu'à l'organe d'adaptation 4 qui lui est affecté (cas de l'usager A1 sur la figure 1 par exemple). Ce transport s'effectue par exemple à l'aide de cellules ATM selon le protocole AAL1 connu de l'Homme du métier.

Dans le cas où l'organe d'adaptation 4 affecté à un usager A est rattaché au même commutateur 1 que A (cas de l'usager A2 sur la figure 1), l'organe d'adaptation 4 peut recevoir les échantillons de parole directement, sans passer par une mise en cellules et l'étape (1) n'est plus nécessaire.

### Deuxième étape

Le procédé comporte ensuite une deuxième étape (2), mise en oeuvre dans l'organe d'adaptation 4 affecté à l'usager A. L'étape (2) comporte par exemple les sous-étapes suivantes :
(2a) collecter les échantillons de parole produits par l'usager, puis les transformer en trames vocodées en utilisant un algorithme de compression après une étape de collecte réalisée, par exemple, en les extrayant des cellules AAL1 produites à l'étape (1),
(2b) former un paquet de « données applicatives » constitué par un nombre fixe de trames vocodées successives d'une communication donnée, auxquelles s'ajoutent d'éventuelles données de signalisation utiles à leur exploitation par l'usager destinataire ;
(2c) former un paquet Pi du protocole AAL2 (paquet CPS Common Part Sublayer) constitué du paquet de « données applicatives » et d'un entête CPS comprenant les informations requises par le protocole, telles que le champ LI de taille des données, le champ CID d'identification du canal, le champ UUI véhiculant une information de bout en bout, le champ HEC de protection contre les erreurs dans l'entête ;
(2d) insérer le paquet CPS ainsi formé dans une cellule ATM, par exemple, à partir du deuxième octet de la charge utile de la cellule, le premier octet étant réservé à un champ STF requis par le protocole AAL2, et les octets suivant le paquet CPS restant inutilisés (champ PAD ou octets de bourrage).

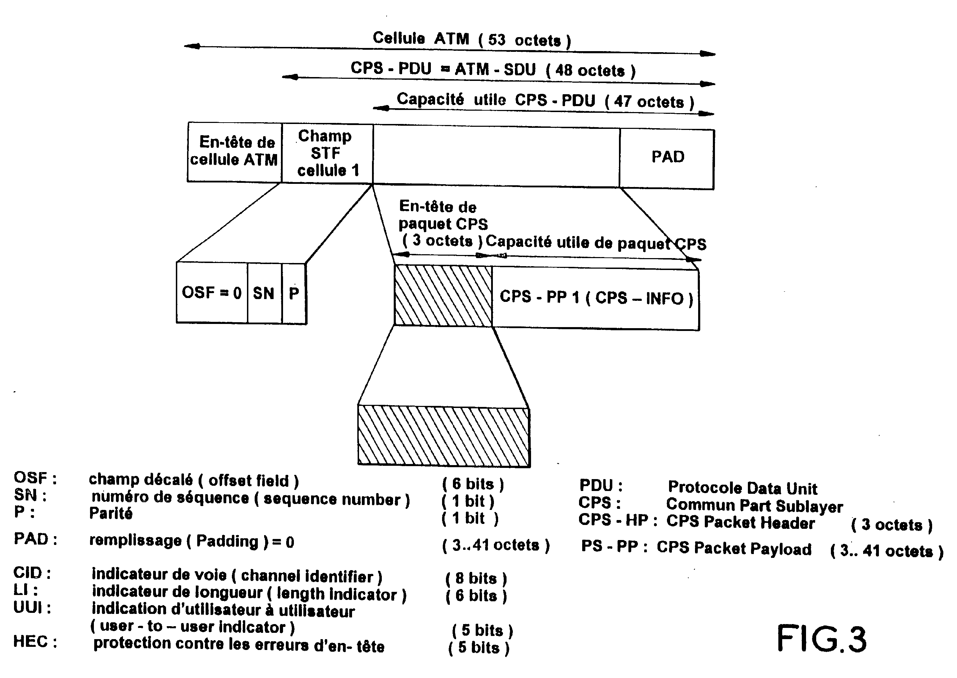

La figure 3 représente le format des cellules résultant de l'étape (2d). Les cellules de ce format sont dites en mode AAL2 non multiplexé.

Dans cet exemple de réalisation, l'étape (2a) comporte la transformation de toute séquence de 240 échantillons MIC, représentés chacun sur un octet, en une trame vocodée selon la norme G.723.1 précité, chaque trame ayant une longueur 1, 4 ou 20 octets et correspondant à 30 ms de parole. Un paquet de données applicatives contient deux trames vocodées plus un octet de signalisation, sa taille variant entre 3 et 41 octets. L'octet de signalisation permet d'indiquer le mode de fonctionnement de la communication (voix, fax clair ou chiffré, algorithme de compression utilisé, etc...) car celui-ci est susceptible de varier dans le temps. L'organe d'adaptation 4 est embarqué dans le commutateur 1 sous la forme d'une carte équipée d'un processeur de traitement de signal effectuant les quatre sous-étapes identifiées ci-dessus.

Cette étape (2) permet avantageusement de limiter le délai de latence à la durée d'un nombre constant de trames vocodées, soit deux fois 30 ms dans ce mode de réalisation.

### Troisième étape

Dans une troisième étape (3), la cellule construite lors de la deuxième étape, voyage à travers le réseau ATM jusqu'à un commutateur situé en amont d'une artère à « bas débit » 3 que doit emprunter cette cellule.

### Quatrième étape

La cellule est ensuite traitée au cours d'une quatrième étape (4), par l'organe multiplexeur 5a rattaché au commutateur amont 1a de cette artère à « bas débit ». Cette étape consiste par exemple à :
(4a) extraire les paquets CPS des cellules incidentes,
(4b) les insérer conformément au protocole AAL2, par exemple, dans les cellules d'un circuit virtuel unique 7 établi entre les organes multiplexeur 5a, 5b.

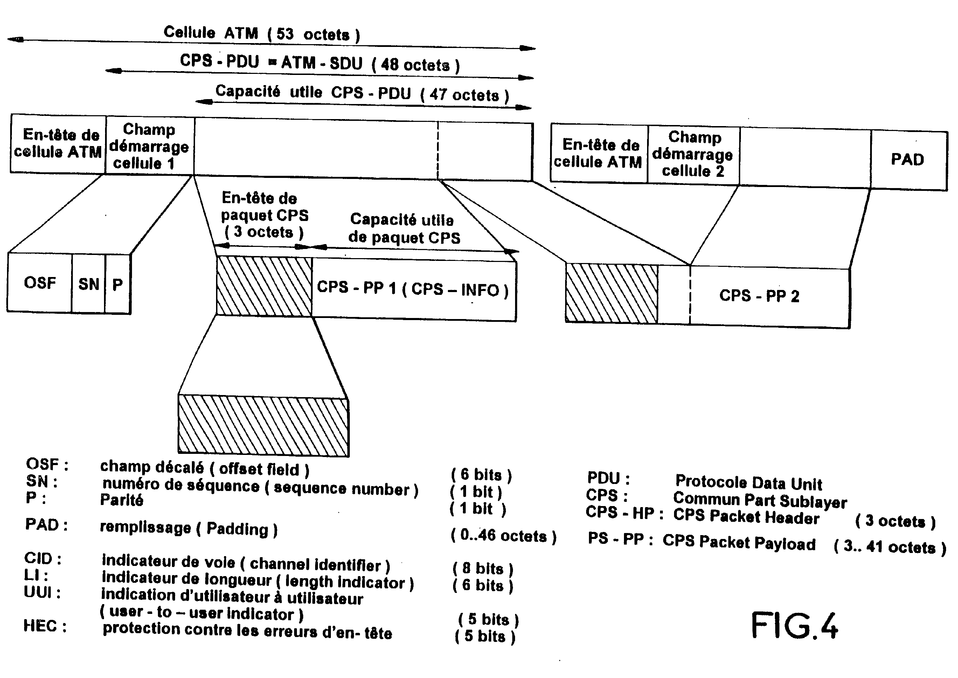

La figure 4 représente le format des cellules résultant de l'étape (4b). Les cellules de ce format sont dites en mode AAL2 multiplexé.

Au cours de cette étape, les paquets CPS correspondant à des communications distinctes peuvent se trouver multiplexés dans une même cellule. Ceci correspond au cas le plus favorable permettant d'optimiser l'utilisation de la bande passante.

Selon un mode de réalisation, lorsque l'activité des communications simultanément présentes sur l'artère ne permet pas de disposer de plusieurs paquets CPS à envoyer dans une même cellule, la cellule est envoyée à l'expiration d'une temporisation réglable, armée lorsque le premier paquet CPS y est inséré.

L'organe multiplexeur 5a, 5b est par exemple embarqué respectivement dans le commutateur 1a, 1b sous forme de carte équipée d'un microprocesseur ATMizer (produit commercialisé par la société LSI Logic) effectuant les deux sous-étapes indiquées ci-dessus.

### Cinquième étape

Les cellules du circuit virtuel 7 sont reçues par le commutateur aval 1b de l'artère à bas débit et traitées par l'organe multiplexeur 5b qui lui est rattaché. Cette étape consiste, par exemple à :
(5a) extraire les paquets CPS des cellules,
(5b) déterminer la connexion à laquelle ils appartiennent par observation du champ CID présent dans l'entête CPS,
(5c) insérer ces paquets dans les cellules des circuits virtuels 6 auxquels ils appartiennent respectivement, à raison d'un paquet par cellule comme dans l'étape (2d).

Dans le cas où une extrémité aval de l'artère à bas débit est également l'extrémité amont d'une autre artère à bas débit, l'étape (4b) est effectuée à la place de l'étape (5c).

Lorsque la cellule doit encore passer par une artère à bas débit non directement connectée au commutateur où la cellule se trouve actuellement, l'étape (3) (acheminement des informations dans les artères ayant un débit normal dans le réseau) est par exemple réitérée à la suite de l'étape (5).

### Sixième étape

La cellule construite à l'étape (5c) voyage à travers le réseau ATM jusqu'au commutateur embarquant l'organe d'adaptation 4 affecté à l'usager B.

### Septième étape

Au niveau de l'organe d'adaptation 4 affecté à l'usager B, les étapes suivantes sont mises en oeuvre :
(7a) extraire les paquets CPS des cellules,
(7b) déterminer l'usager destinataire des données applicatives ,
(7c) déterminer si des paquets CPS ont été perdus en chemin et générer des données conventionnelles de remplacement pour les paquets perdus,
(7d) exploiter les données de signalisations insérées dans le paquets de données applicatives,
(7e) extraire les trames vocodées des paquets de données aplicatives,
(7f) décompresser les trames vocodées pour recréer les échantillons de parole initiaux, puis
(7g) transmettre directement les échantillons de parole à l'usager B si il est connecté directement au commutateur (cas de B1 sur la figure 1).

### Huitième étape

Cette étape est facultative et peut être considérée comme le pendant de l'étape (1). Elle consiste à transporter les échantillons de parole obtenus à l'étape (7f) jusqu'à l'usager B si il n'est pas connecté directement au commutateur hébergeant l'organe d'adaptation 4 (cas de B2 sur la figure 1).

Ce transport s'effectue à l'aide de cellules ATM selon le protocole AAL1.

### Routage des communications et déroutement des cellules

Selon un mode de réalisation, le réseau met en oeuvre un algorithme de routage connu de l'Homme du métier afin de déterminer le chemin que la communication doit emprunter et afin d'assurer que, si ce chemin passe par une artère à bas débit, il passe également par un commutateur équipé d'un organe d'adaptation en amont et en aval de cette artère à bas débit.

Les cellules d'une communication ne passant pas par une artère à bas débit traversent le réseau selon l'art antérieur, c'est-à-dire qu'elles sont commutées d'artère en artère par chaque commutateur situé sur leur chemin.

Dans le cas d'une communication devant passer par une artère à bas débit, ce fonctionnement n'est plus possible et, selon l'invention, il est nécessaire de dérouter les cellules vers les organes d'adaptation et vers les organes multiplexeurs dans les commutateurs qui en sont équipés. Ceci s'effectue par exemple par une altération de la table de traduction ATM et par des capacités de traduction ATM implantées dans ces organes 4 et 5.

Plus précisément, une première traduction dans le joncteur d'entrée modifie le champ VPINCI de la cellule entrante et désigne l'organe 4 ou 5 comme destination de la cellule. Dans cet organe, la cellule subit les traitements prévus et une table de traduction présente dans ledit organe permet de déterminer le champ VPI/VCI et la direction sortante des cellules produites lors de ces traitements.

S'il s'agit d'un organe d'adaptation 4, le champ VPI/VCI attribué est l'identificateur déterminé par le routage.

S'il s'agit d'un organe multiplexeur 5, le champ VPI/VCI attribué dépend du sens de la cellule : en direction d'une artère à bas débit, il s'agira de l'identificateur attribué au circuit virtuel 7 établi entre organes multiplexeurs ; en direction d'une artère normale, il s'agira de l'identificateur déterminé par le routage.

### Préservation de l'intégrité binaire

La figure 2 schématise la transmission d'une information entre un usager A1 et un usager B2, qui traverse 5 tronçons délimités chacun par des commutateurs 1 :
- Un tronçon entre l'usager A1 et l'organe d'adaptation 4 qui lui est affecté, tronçon AAL1,
- Un tronçon entre cet organe d'adaptation 4 (affecté à l'usager A1) et l'organe multiplexeur amont 5a de l'artère bas débit, tronçon AAL2 non multiplexé,
- Un tronçon entre les organes multiplexeur amont 5a et aval 5b de l'artère bas débit, tronçon AAL2 multiplexé,
- Un tronçon entre l'organe multiplexeur aval 5b et l'organe d'adaptation 4 affecté à B2, tronçon AAL2 non multiplexé,
- Un tronçon entre cet organe d'adaptation (affecté à B2) et B2 lui-même, tronçon AAL1.

Sur chacun de ces tronçons, des cellules peuvent être perdues soit à cause d'un encombrement, soit à cause d'erreurs de transmission endommageant l'entête de façon telle qu'il ne peut être corrigé.

Sur chaque tronçon AAL1, un champ prévu par le protocole AAL1 est utilisé pour numéroter les cellules. Ceci permet, dans certaines conditions, de détecter les pertes de cellules et de remplacer les cellules perdues par une cellule contenant les échantillons d'un motif sonore conventionnel de remplacement.

Sur chaque tronçon AAL2 non multiplexé, le sous-champ SN (numéro de séquence) du champ STF est utilisé pour numéroter grossièrement (1 bit seulement) les cellules. Ceci permet, dans certains conditions de détecter les pertes de cellules et de remplacer facultativement les cellules perdues par une cellule contenant un paquet CPS (Commun Part Sublayer) conventionnel de remplacement. Le champ CID (indicateur de voie) de l'entête du paquet CPS est reconstitué à partir de l'identificateur de voie logique VPI/VCI présent dans la cellule mais le champ UUI ne peut pas être régénéré de façon simple.

Sur chaque tronçon AAL2 multiplexé, le sous-champ SN du champ STF est utilisé conformément à la norme pour détecter les pertes de cellules et traiter les paquets CPS impactés.

Sur l'ensemble des tronçons AAL2 entre deux organes d'adaptation 4, le champ UUI de l'entête des paquets CPS est utilisé, par exemple, pour véhiculer un numéro de séquence sur 5 bits, qui permettra à l'extrémité réceptrice de détecter la perte d'un paquet CPS et de remplacer son contenu par un paquet de données applicatives conventionnel de remplacement.

### Commutateur AAL2

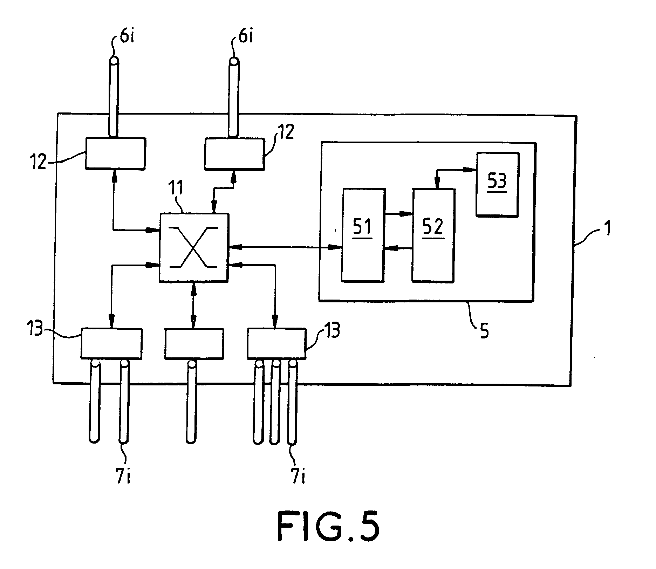

La figure 5 décrit un exemple de commutateur ATM équipé d'un organe multiplexeur se comportant fonctionnellement comme un commutateur de paquets CPS entre différentes artères virtuelles constituées par des connexions ATM en mode AAL2 multiplexé ou non multiplexé.

Le commutateur comprend, par exemple, un brasseur 11 et des joncteurs d'artères 12 et 13, dont les premiers permettent le raccordement à des artères à bas débit. Des connexions 7i en mode AAL2 multiplexé entrent dans le commutateur par les joncteurs 12. Des connexions 6i en mode AAL2 non multiplexé entrent dans les commutateurs par les joncteurs 13. Le commutateur est aussi pourvu d'un organe multiplexeur 5 relié au brasseur. L'organe multiplexeur 5 comprend par exemple :
- Une fonction 51 effectuant la mise en cellules des paquets CPS et leur extraction des cellules,
- Une fonction 52 de commutation AAL2 qui aiguille les paquets CPS reçus en provenance de la fonction 51 vers cette même fonction après détermination de l'artère virtuelle de sortie par consultation d'une table de correspondance 53.

Le fonctionnement d'un tel commutateur est par exemple le suivant :

Quand une cellule arrive dans le commutateur ATM par l'une de ces artères virtuelles, celui-ci l'envoie à l'organe multiplexeur 5 après traduction du champ VPI/VCI dans le brasseur 11. L'organe multiplexeur extrait les paquets CPS des cellules reçues sur chacune des artères virtuelles dans la fonction 51 et les transmet à la fonction de commutation 52. En fonction de l'artère virtuelle de réception (identifiée par le champ VPINCI de la cellule) et en fonction de l'identificateur de circuit (identifié par le champ CID du paquet CPS) une table de commutation 53 donne l'artère virtuelle de sortie (identifiée par l'identificateur VPI/VCI) et la direction sortante du brasseur ATM. Le paquet CPS est ensuite transféré à la fonction 51 qui l'insère dans une cellule envoyée sur cette artère en conformité avec le mode AAL2 choisi pour l'artère virtuelle dont il est question.

Alternativement, il est possible que le champ CID des paquets CPS provenant d'une artère virtuelle en mode AAL2 non multiplexé ne soit pas utilisé car la seule indication du VPI/VCI de l'artère virtuelle suffit à caractériser le circuit.

De manière plus générale et sans sortir du cadre de l'invention, le procédé peut être appliqué dans tout réseau de communication comportant une ou plusieurs artères à bas débit telles que définies précédemment, les trames résultantes étant de taille inférieure à la taille de l'unité de communication du réseau, utilisée pour transférer les informations et une couche d'adaptation permettant le multiplexage de paquets de longueur variable dans une cellule.

Les données à acheminer sont par exemple des données multiservices telles que la vidéo, la voix,...

## Revendications

1. Procédé pour acheminer des données entre plusieurs usagers A, B, dans un réseau de communication comportant au moins une artère à bas débit et une ou plusieurs artères à débit normal, le réseau comportant une unité de base de transmission et au moins un protocole de couche d'adaptation, les données à transmettre se présentant sous la forme de paquets Pi ayant une taille inférieure à la taille de l'unité de base de transmission, **caractérisé en ce qu'**il comporte au moins les étapes suivantes :
• extraire les paquets Pi des cellules en amont et/ou en aval d'une artère à bas débit, (étapes (4a) ou (5a)),
• insérer lesdits paquets selon un protocole de couche d'adaptation donné, dans les cellules d'un circuit virtuel établi entre les extrémités de l'artère à bas débit, (étape (4b)), ou entre les usagers, (étapes (5b) et (5c)).

2. Procédé selon la revendication 1 **caractérisé en ce qu'**il comporte un multiplexage de données d'un même usager ou d'usagers différents, en amont de l'artère à bas débit et/ou un démultiplexage en aval de l'artère à bas débit.

3. Procédé selon la revendication 1 **caractérisé en ce que** les cellules sont déroutées avant les étapes d'extraction (étape (4a)) et d'insertion (étape (4b)) et les cellules issues de l'étape (5c) sont injectées dans un circuit virtuel établi entre usagers.

4. Procédé selon l'une des revendications 1 à 3 **caractérisé en ce qu'**il utilise le protocole AAL2 pour insérer les paquets.

5. Procédé selon l'une des revendications 1 à 4 **caractérisé en ce qu'**il comporte une étape préalable à l'extraction des paquets où :
• (2a) les données sont transformées en trames en utilisant un algorithme de compression,
• (2b) un paquet de données applicatives est formé à partir d'un nombre fixe de trames successives et de données de signalisation éventuelles,
• (2c) un paquet Pi est formé à partir du paquet de données et d'un entête ,
• (2d) le paquet Pi est inséré dans une cellule avant d'être soumis à l'étape (4a).

6. Procédé selon la revendication 5 **caractérisé en ce qu'**il comporte une étape de transport des données à l'aide de cellules, préalable à l'étape (2a), selon un protocole de type AAL1 entre l'usager émetteur des données et un organe d'adaptation (4).

7. Procédé selon l'une des revendications 1 à 4 **caractérisé en ce qu'**il comporte en aval d'une artère à bas débit une étape comportant :
• (5b) la détermination de la connexion à laquelle les paquets Pi appartiennent,
• (5c) l'insertion des paquets dans des cellules pour transmission ou opérer l'étape (4b) si l'aval de l'artère correspond à l'extrémité amont d'une autre artère à bas débit.

8. Procédé selon l'une des revendications 1 à 4 **caractérisé en ce qu'**il comporte au niveau de l'usager destinataire une étape comportant au moins :
• (7a) l'extraction de paquets Pi des cellules,
• (7b) la détermination de l'usager destinataire,
• (7c) le traitement et le contrôle des informations pour obtenir les données initiales (émises par l'usager émetteur).

9. Procédé selon l'une des revendications 1 à 8 **caractérisé en ce qu'**il utilise le champ UUI de l'entête d'un paquet Pi de type CPS pour contrôler l'intégrité des données transmises entre deux usagers en communication.

10. Application du procédé selon l'une des revendications 1 à 9 au transfert de données au format vidéo, voix numérique,....

11. Dispositif de commutation de données entre plusieurs usagers A, B pour un réseau de communication comportant au moins une artère à bas débit et une ou plusieurs artères à débit normal, le réseau comportant une unité de base de transmission, telle qu'une cellule, et supportant au moins un protocole de couche d'adaptation **caractérisé en ce qu'**il comporte au moins un organe multiplexeur (5) adapté à commuter des paquets Pi transportés dans les cellules selon le protocole d'adaptation, entre plusieurs artères virtuelles constituées par des connexions en mode multiplexé ou non multiplexé.

12. Dispositif selon la revendication 11 **caractérisé en ce qu'**il comporte au moins les éléments suivants :
• un brasseur (11) pour transmettre une cellule vers l'organe multiplexeur (5) et pour commuter de manière transparente les cellules ne devant pas emprunter une artère à bas débit,
• un moyen (51) pour extraire les paquets Pi des cellules empruntant une artère à bas débit et la mise en cellules des paquets, pour chaque artère virtuelle,
• un moyen (52) d'aiguillage des paquets reçus du moyen (51) et une table (53) adaptée à déterminer l'artère virtuelle de sortie de la cellule.

13. Dispositif selon la revendication 12 **caractérisé en ce qu'**il est utilisé dans un réseau supportant un protocole d'adaptation de type AAL2.

14. Dispositif selon l'une des revendications 12 ou 13 **caractérisé en ce que** le dispositif de commutation est un commutateur ATM équipé d'un organe multiplexeur ayant pour rôle de commuter des paquets CPS entre différentes artères virtuelles constituées par des connexions ATM en mode AAL2 multiplexé ou non multiplexé.

15. Réseau pour transporter des données sous forme de cellules entre plusieurs usagers A, B, le réseau comportant une ou plusieurs artères à bas débit, au moins un protocole d'adaptation et une unité de base de transmission, telle qu'une cellule, **caractérisé en ce qu'**il comporte au moins un dispositif de commutation selon l'une des revendications 11 à 14 disposé en amont et /ou en aval d'une artère à bas débit.

16. Réseau de communication selon la revendication 15 comportant un ou plusieurs commutateurs ATM.
